# FASCICULE DE BREVET EUROPEEN

(11) **EP 1 093 947 B1**
(45) Date de publication et mention de la délivrance du brevet: **29.03.2006**
(21) Numéro de dépôt: 00460055.7
(22) Date de dépôt: 03.10.2000
(51) Int. Cl.: B60J 1/20

(54) **Store à enrouler motorisé, à moyens de solidarisation sélective du tube d'enroulement aux moyens de motorisation**
Motorisiertes Fensterrollo, mit selektiver Kupplunsvorrichtung zwischen Aufwickelrohr und Motorantrieb
Blind with a powered rolling mechanism, with selective coupling of the winding tube with the motor means

(30) Priorité: 22.10.1999 FR 9913474
(43) Date de publication de la demande: 25.04.2001
(73) Titulaire: WAGON SAS, 79300 Bressuire (FR)
(72) Inventeur: Jolivet, David, 79300 Bressuire (FR)
(74) Mandataire: Vidon, Patrice

(56) Documents cités:
- EP-A- 0 221 573
- EP-A- 0 240 747
- DE-A- 3 735 622
- DE-A- 19 539 848
- FR-A- 2 588 307

## Description

Le domaine de l'invention est celui des stores à enrouleur, notamment pour véhicule automobile. Plus précisément, l'invention concerne les stores à enrouleur motorisé, dans lesquels les moyens de motorisation assurent le déroulement et/ou l'enroulement de la toile d'occultation du store.

Classiquement, un store à enrouleur présente une toile, ou rideau, formant écran en position déployée. Une de ces extrémités de cette toile est montée sur un rouleau, ou tube, d'enroulement mobile en rotation. L'autre extrémité de la toile est munie d'une barre de tirage. En position reployée, la toile est essentiellement enroulée autour du tube d'enroulement, et la barre de tirage se trouve donc au voisinage de ce tube. Pour déployer la toile, on agit sur la barre de tirage, de façon à l'éloigner du tube d'enroulement, ce qui entraîne le déploiement de la toile.

Dans les stores motorisés notamment, on prévoit la présence d'un ou plusieurs leviers de guidage de la barre de tirage, ou de moyens similaires, assurant le guidage et/ou le maintien de l'écran en position déployée.

On connaît ainsi, par exemple par le brevet EP 0 240 747 192, le document comprenant les caractéristiques du préambule de la revendication 1, un store électrique présentant deux leviers dont le déplacement est actionné par un moteur. Sous l'effet d'une commande adéquate, le moteur entraîne le déplacement des leviers, qui entraînent eux-mêmes la barre de tirage, et par conséquent la toile. Des moyens de rappel agissent sur le tube d'enroulement, de façon que le ré-enroulement de la toile se fasse dans de bonnes conditions.

Cette technique présente cependant un certain nombre d'inconvénients, liés notamment au fait que la faible amplitude du mouvement des leviers (environ 90°) correspond à plusieurs tours du tube d'enroulement. Le mouvement de ce dernier doit donc être très rapide, pour suivre le mouvement des leviers. Cela peut notamment poser des problèmes lors du ré-enroulement de la toile.

Une autre approche a été proposée par le titulaire de la présente demande de brevet, en particulier dans le document de brevet FR-85 14731. Selon cette technique, les moyens de motorisation agissent directement sur le tube d'enroulement, pour entraîner celui-ci en déroulement et/ou en ré-enroulement. Dans ce cas, les leviers ont essentiellement une fonction de guidage et de maintien de la barre de tirage. Il est ainsi possible d'obtenir un déroulement et/ou un enroulement plus progressif.

Quel que soit le mode de mise en oeuvre de la motorisation, on constate cependant que les systèmes connus ne sont pas adaptés aux situations particulières et intempestives, telles que la présence d'un objet quelconque formant obstacle (vêtement ou document posé sur la lunette arrière, objet introduit par inadvertance dans le boîtier du store,... ), et interagissant avec la toile ou la barre de tirage lors du déploiement ou reploiement du store.

Dans ce cas, la barre de tirage se bloque, sort de sa trajectoire et/ou présente un déplacement asymétrique (elle ne reste pas parallèle au tube d'enroulement). Cette situation, que l'on rencontre en pratique couramment, peut conduire selon les cas à une détérioration des moyens de motorisation, qui continuent à tourner et à forcer, à la casse ou la détérioration de la barre de tirage et/ou des leviers associés, à la détérioration de la toile, ou encore à un mauvais enroulement de celle-ci, qui conduit à un blocage de la toile à l'intérieur de son boîtier. Des problèmes similaires se rencontrent lorsque l'élément intempestif agit sur l'un ou l'autre des leviers.

Un autre problème des stores à enrouleur motorisé de type connu est celui de l'arrêt des moyens de motorisation lorsque le store est arrivé en position finale (position déployée ou position reployée).

L'invention à notamment pour objectif de pallier ces différents inconvénients des techniques antérieures.

Plus précisément, un objectif de l'invention est de fournir un store à enrouleur motorisé qui ne se détériore pas (moteur, parties mécaniques et toile) ni ne prend des positions inadéquates en cas de présence d'un obstacle empêchant le bon déploiement ou reploiement de la toile.

Un autre objectif de l'invention est de fournir un tel store, qui ne nécessite pas la mise en oeuvre de moyens complexes pour contrôler les moyens de motorisation, lorsque le store est complètement déployé, ou complètement ré-enroulé.

L'invention a également pour objectif de fournir un tel store à enrouleur motorisé, qui permette de contrôler la vitesse de rotation du tube d'enroulement, et notamment d'éviter que celui-ci soit entraîné trop rapidement, sous l'effet de moyens de rappel.

Encore un autre objectif de l'invention est, bien entendu, de fournir un tel store à enrouleur motorisé, qui ne mette pas en oeuvre de moyens complexes et coûteux, mais qui soit au contraire simple et efficace à mettre en oeuvre, et qui présente donc en conséquence un coût de revient acceptable.

Ces objectifs, ainsi que d'autres qui apparaîtront plus clairement par la suite, sont atteints à l'aide d'un store à enrouleur motorisé, du type présentant un rideau déployable monté sur un tube d'enroulement susceptible d'être entraîné en rotation par des moyens de motorisation.

Selon l'invention, ledit store comprend des moyens de solidarisation sélective dudit tube d'enroulement auxdits moyens de motorisation, de façon que ledit tube d'enroulement soit entraîné par lesdits moyens de motorisation dans de premières conditions prédéterminées, et soit désolidarisé desdits moyens de motorisation dans de secondes conditions prédéterminées.

Ainsi, les moyens de motorisation agissent essentiellement lorsqu'ils sont nécessaires, et non de façon systématique. Notamment, il est possible de désolidariser les moyens de motorisation et le tube lorsqu'un obstacle bloque le déplacement de la barre de tirage.

Selon un mode réalisation avantageux, on prévoit ainsi que ledit tube d'enroulement est solidarisé audits moyens de motorisation lors du ré-enroulement dudit rideau, le déroulement dudit rideau se faisant sous l'action d'au moins une biellette entraînant une barre de tirage montée sur l'extrémité libre dudit rideau, sous l'action de moyens de rappel.
Par ailleurs, lors du déroulement dudit rideau, lesdits moyens de solidarisation agissent avantageusement de façon que ledit tube d'enroulement tourne librement, tant que sa vitesse de rotation est inférieure à une vitesse prédéterminée, et vient en prise avec lesdits moyens de motorisation lorsque ladite vitesse de rotation du tube d'enroulement est supérieure ou égale à la vitesse de rotation desdits moyens de motorisation.

En d'autres termes, les moyens de solidarisation assurent un rôle de régulation et de freinage, lorsque le déroulement est trop rapide.

Selon un mode de réalisation préférentiel de l'invention, lesdits moyens de solidarisation comprennent une roue libre, assurant les fonctions décrites ci-dessus.

Ladite roue libre peut notamment comprendre au moins un rochet, solidaire dudit tube d'enroulement (respectivement desdits moyens de motorisation), et au moins un cliquet, solidaire desdits moyens de motorisation (respectivement dudit tube d'enroulement) et susceptible de coopérer avec le ou lesdits rochets.

Selon un autre mode réalisation avantageux de l'invention, ladite roue libre comprend un système d'entraînement conique.

Dans les deux cas, on dispose d'un système silencieux, et simple à mettre en oeuvre.

Selon un mode de réalisation particulier de l'invention, ledit store comprend deux biellettes symétriques, se déployant sous l'action d'un ressort les reliant.

Avantageusement, la ou lesdites biellettes sont constituées de deux éléments formant compas.

De façon préférentielle, l'alimentation desdits moyens de motorisation est interrompue, lors de l'enroulement et/ou du déroulement, sous l'action de moyens de détection de fin de course et/ou de moyens de temporisation.

Lesdites temporisations tiennent compte du temps nécessaire au déploiement ou au reploiement, avec une marge de tolérance adaptée.

Lesdits moyens de motorisation peuvent comprendre un moteur et des moyens de réduction correspondants montés notamment selon l'une des techniques suivantes :
- à l'intérieur dudit tube d'enroulement ;
- dans le prolongement dudit tube d'enroulement ;
- parallèlement audit tube d'enroulement ;
- perpendiculairement audit tube d'enroulement.

D'autres caractéristiques et avantages de l'invention apparaîtront plus clairement à la lecture de la description suivante d'un mode de réalisation préférentiel de l'invention, donné à titre de simple exemple illustratif et non limitatif, et des figures annexées, parmi lesquelles :
- la figure 1 illustre un store à enrouleur motorisé selon l'invention, équipé d'une roue libre ;
- les figures 2a et 2b présentent le principe, connu en soi, de la roue libre du store de la figure 1, respectivement dans les positions suivantes :
   - figure 2a : roue libre en prise ;

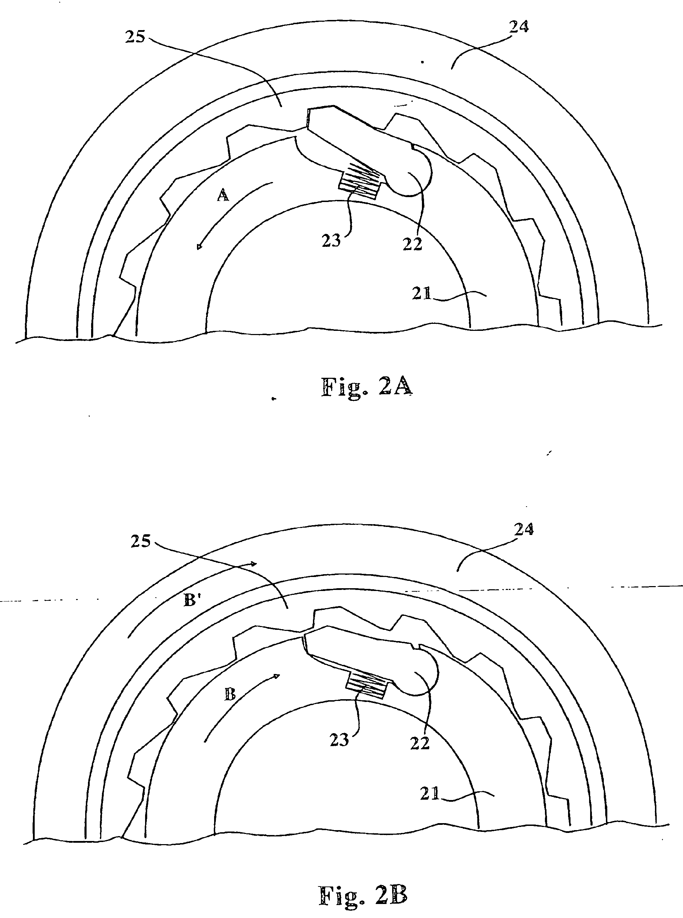

   - figure 2b : roue libre en position "libérée" ;

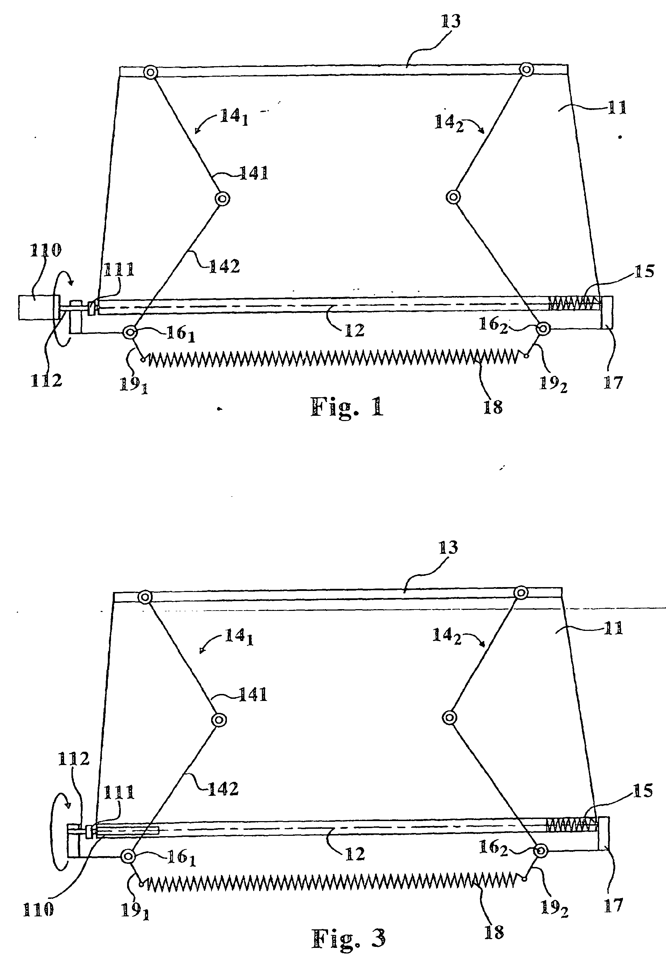

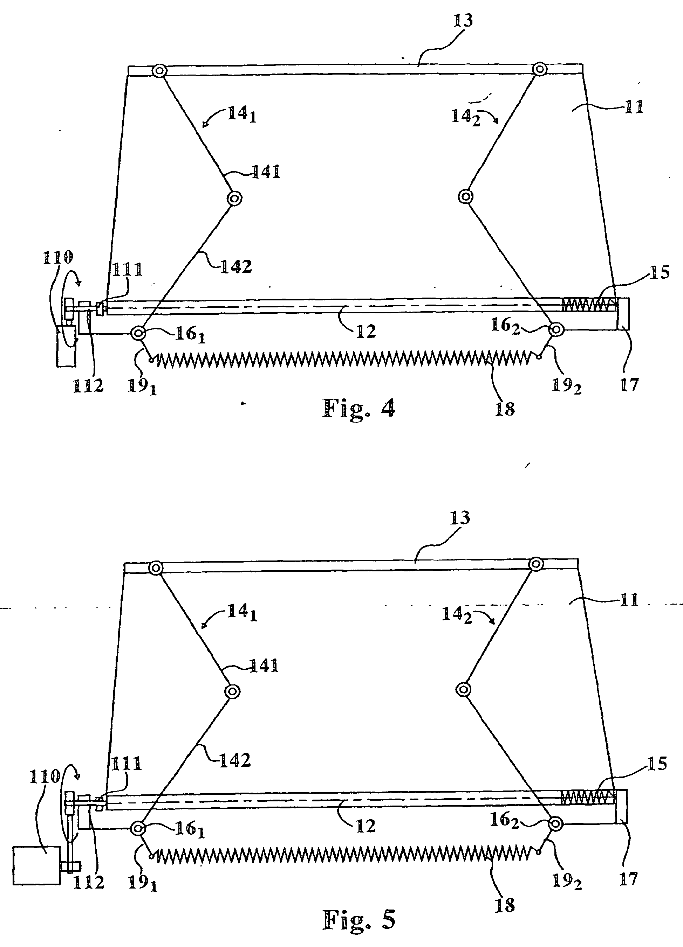

- les figures 3 à 5 illustrent trois variantes de mise en oeuvre du store de la figure 1, dans lesquelles le moteur est respectivement :
   - figure 3 : placé à l'intérieur du tube enrouleur ;
   - figure 4 : placé perpendiculairement au tube enrouleur ;
   - figure 5 : placé parallèlement au tube enrouleur.

Comme indiqué précédemment, l'invention propose d'insérer, entre les moyens de motorisation et le tube enrouleur du store, des moyens de solidarisation sélective, de façon que, dans certaines conditions, le moteur et le tube soient en prise, en que dans d'autres conditions, le tube puisse tourner librement, indépendamment du moteur. Cela permet par exemple de désolidariser le tube des moyens de motorisation lorsqu'il est entraîné par des leviers de guidage (tout en contrôlant la vitesse maximum de rotation du tube, comme on le verra ci-après).

Ces moyens de solidarisation sélective peuvent être de tous types adéquats, et par exemple basés sur des éléments d'engrenage, des moyens d'embrayage,...

Une technique avantageuse, bien que non exclusive, est l'utilisation d'une roue libre comme décrit plus en détail par la suite.

La figure 1 illustre un store à enrouleur selon l'invention, en position déployée, ou quasi-déployée. Classiquement, la toile 11 est montée sur un tube enrouleur 12. Une barre de tirage 13 montée à l'extrémité libre de la toile 11 est entraînée par deux leviers 14₁, 14₂.

Dans le mode de réalisation illustré, ces leviers sont réalisés sous la forme de deux biellettes 141, 142 articulées et formant compas. Bien entendu, d'autres types de leviers peuvent être envisagés, et notamment des leviers formés d'une unique biellette (l'une de leurs extrémités étant alors mobile, par exemple dans la barre de tirage 13, d'un pantographe,...)

Les deux leviers 14₁ et 14₂ sont montés pivotant sur deux axes 16₁, 16₂ solidaires du bâti ou du boîtier, du store.

Selon un mode de réalisation avantageux de l'invention, le déploiement des leviers 14₁ et 14₂, est assuré par un ressort 18 reliant les deux extrémités 19₁, 19₂ d'actionnement des leviers 14₁,14₂. Cette technique, qui fait l'objet d'une demande de brevet non encore publiée, au nom du titulaire de la présente demande de brevet, présente l'avantage d'homogénéiser le déplacement des deux leviers 14₁, 14₂, en compensant les efforts différentiels entre ces derniers.

Le tube enrouleur 12 est équipé d'un ressort de compensation 15, qui agit sur le tube de façon à toujours tendre la toile 11.

Un moteur 110 est prévu, pour entraîner le tube d'enroulement 12.

Selon l'invention, on prévoit des moyens de solidarisation sélective, par exemple sous la forme d'une roue libre 111, entre l'axe 112 du moteur (et des moyens de réduction associés) et le rouleau d'enroulement 12.

La roue libre peut également être intégré à l'intérieur du tube. Elle présente alors par exemple un diamètre identique au diamètre intérieur du tube, et est introduit à force dans ce dernier.

Un exemple de roue libre 111 est illustré par les figures 2a et 2b. L'axe 112 est équipé d'une bague 21, sur laquelle est monté pivotant un cliquet 22, qu'un ressort 23 tend à éloigner de la bague 21.

Le tube enrouleur 12 présente quant à lui un moyeu 24, équipé d'encoches, ou rochets, 25, prévus pour coopérer avec le cliquet 22.

On constate donc que, lorsque la bague 21 est entraînée dans le sens de rotation A (repliement du store dans l'exemple discuté) le cliquet 22 est en prise avec le rochet 25, et entraîne donc le tube enrouleur (figure 2a). En revanche, lorsque la bague 21 est entraînée dans le sens de rotation B (correspondant au déploiement du store dans le cas discuté), le cliquet n'interagit plus avec les rochets 25, et la bague 21 tourne "dans le vide" sans entraîner le moyeu 24.

On revient cependant dans la situation de la figure 2a dès que le tube à enrouleur tournant dans le même sens (B') atteint une vitesse supérieure ou égale à celle de la bague 21. Comme on le verra par la suite, cette caractéristique permet de contrôler et limiter la vitesse de déploiement du store.

Bien sur les rôles de la bague et du moyeu peuvent être inversés, par rapport au tube et au moteur. Par ailleurs, d'autres types de roues libres peuvent bien sûr être utilisés, et par exemple les roues libres mettant en oeuvre un système conique.

On décrit maintenant le fonctionnement du store de la figure 1.

Lors de la montée du store, le moteur 110 est actionné dans le sens de rotation B. La roue libre 111 permet que le tube ne soit pas entraîné en rotation par le moteur 110, mais soit au contraire libéré (figure 2b).

Sous l'action du ressort 18 reliant les leviers 14₁ et 14₂, ceux-ci se déploient, entraînant la barre de tirage 13 qui, en tirant sur la toile 11, la déroulent.

La fonction du moteur 110 est donc, lors de la montée, de ralentir la montée du store, lorsque la vitesse du tube devient trop importante, c'est-à-dire supérieure à celle générée par le moteur 110 en sortie de son système de réduction, par l'intermédiaire de la roue libre 111, qui revient en prise, comme indiqué précédemment.

La position haute du store peut par exemple du store être donnée par les butées mécaniques des leviers 14₁ et 14₂. Arrivé à cette position haute, le moteur 110 peut continuer de tourner dans le sens de rotation B, sans aucune action sur la toile 11, en raison de l'effet roue libre. En conséquence, ce moteur 110 ne se trouve pas en rotor bloqué. Le ressort de compensation 15 qui se trouve à l'intérieur du tube enrouleur 12 assure l'attention de la toile 11.

L'alimentation du moteur 110 peut alors être coupée, soit par une temporisation déclenchée au moment de l'ordre de montée du store, soit par un détecteur de fin de course du store.

Lorsque l'ordre de montée du store a été donné, et qu'un obstacle s'oppose au déroulement complet du store, le système réagit comme s'il se trouvait en position haute, la barre de tirage 113 ne monte plus, le moteur 110 tourne dans le sens de rotation B, mais la toile 11 ne se déroule pas, en raison de l'action de la roue libre 111.

Dès que l'on enlève l'obstacle, la montée continue à se faire normalement, éventuellement dans la limite du temps déterminé par la temporisation.

En cas de déséquilibre des leviers 14₁ et 14₂, dû par exemple à un obstacle excentré par rapport à l'axe médian du store, le système réagit de la même façon.

Pour la descente du store, le moteur 110 est actionné dans le sens de rotation A (figures 2a). Le moteur entraîne alors le tube enrouleur 12 en rotation, ce qui entraîne l'enroulement de la toile 11 autour de ce tube 12. L'effort fourni par le moteur 110 étant supérieur à la force du ressort 18 reliant les leviers 14₁, 14₂, ceux-ci se replient en même temps que la toile 11 s'enroule. De ce fait, la toile 11 reste tendue.

Dans ce sens de rotation, comme indiqué précédemment, la roue libre 111 ne débraye pas, mais entraîne le tube 12.

L'arrêt du store en position basse se fait par la cinématique des leviers 14₁, 14₂, qui entrent en butée mécanique. Le moteur 110 continue de tourner dans le sens de rotation A et se met en rotor bloqué. La coupure de l'alimentation du moteur 110 peut se faire soit par une temporisation déclenchée lors de l'ordre de descente du store, soit par un détecteur de fin de course.

Les temporisations tiennent compte du temps moyen de déploiement ou de reploiement, ainsi que d'une marge de tolérance permettant de pallier un ralentissement ou un blocage temporaire.

Les détecteurs de fin de course peuvent par exemple tenir compte du courant circulant dans le moteur :
- en fin de course haute, le volume du courant dans le moteur baisse. En dessous d'un premier seuil prédéterminé, on décide de couper l'alimentation ;
- en fin de course basse, le moteur est en rotor bloqué, et le volume de courant monte rapidement. Au dessus d'un second seuil prédéterminé, on décide donc de couper l'alimentation. Cette seconde détection apparaît importante, pour ne pas endommager le moteur.

On notera que la position du moteur et de son système de réduction de vitesse peut être variée, et notamment se trouver :
- dans le prolongement du tube enrouleur 12 (figure 1) ;
- à l'intérieur du tube enrouleur 12 (voir figure 3) ;
- parallèle au tube enrouleur 12 (voir figure 4) ;
- perpendiculaire au tube d'enrouleur 12 (voir figure 5).

Comme cela est apparu clairement à la lecture de la description précédente, la présence de la roue libre, ou de moyens de solidarisation sélective similaire, présente de nombreux avantages et notamment la possibilité de suppression des butées de fin de course haute et basse (des temporisations étant suffisantes), la suppression du déroulement intempestif de la toile en cas de blocage du store par un objet lors du mouvement de montée, ainsi que la simplification du système de gestion électronique.

## Revendications

1. Store à enrouleur motorisé, du type présentant un rideau déployable (11) monté sur un tube d'enroulement (12) susceptible d'être entraîné en rotation par des moyens de motorisation (110),
**caractérisé en ce qu'**il comprend des moyens (111) de solidarisation sélective dudit tube d'enroulement (12) auxdits moyens de motorisation (110), de façon que ledit tube d'enroulement soit entraîné par lesdits moyens de motorisation dans de premières conditions prédéterminées, et soit désolidarisé desdits moyens de motorisation dans de secondes conditions prédéterminées.

2. Store à enrouleur motorisé selon la revendication 1, **caractérisé en ce que** ledit tube d'enroulement (12) est solidarisé audits moyens de motorisation (110) lors du ré-enroulement dudit rideau (11), le déroulement dudit rideau (11) se faisant sous l'action d'au moins une biellette (14₁, 14₂) entraînant une barre de tirage (13) montée sur l'extrémité libre dudit rideau (11), sous l'action de moyens de rappel (18).

3. Store à enrouleur motorisé selon la revendication 2, **caractérisé en ce que**, lors du déroulement dudit rideau (11), lesdits moyens (111) de solidarisation agissent de façon que ledit tube d'enroulement (12) tourne librement, tant que sa vitesse de-rotation est inférieure à une vitesse prédéterminée, et vient en prise avec lesdits moyens de motorisation (110) lorsque ladite vitesse de rotation du tube d'enroulement (12) est supérieure ou égale à la vitesse de rotation desdits moyens de motorisation (110).

4. Store à enrouleur motorisé selon l'une quelconque des revendications 1 à 3, **caractérisé en ce que** lesdits moyens de solidarisation (111) comprennent une roue libre (111).

5. Store à enrouleur motorisé selon la revendication 4, **caractérisé en ce que** ladite roue libre (111) comprend au moins un rochet (25), solidaire dudit tube d'enroulement (12), respectivement desdits moyens de motorisation (110), et au moins un cliquet (22), solidaire desdits moyens de motorisation (110), respectivement dudit tube d'enroulement (12), et susceptible de coopérer avec le ou lesdits rochets (25).

6. Store à enrouleur motorisé selon la revendication 4, **caractérisé en ce que** ladite roue libre (111) comprend un système d'entraînement conique.

7. Store à enrouleur motorisé selon l'une quelconque des revendications 2 à 6, **caractérisé en ce qu'**il comprend deux biellettes symétriques (14₁, 14₂), se déployant sous l'action d'un ressort (18) les reliant.

8. Store à enrouleur motorisé selon l'une quelconque des revendications 2 à 7, **caractérisé en ce que** la ou lesdites biellettes (14₁, 14₂) sont constituées de deux éléments (141, 142) formant compas.

9. Store à enrouleur motorisé selon l'une quelconque des revendications 1 à 8, **caractérisé en ce que** l'alimentation desdits moyens de motorisation (110) est interrompue, lors de l'enroulement et/ou du déroulement, sous l'action de moyens de détection de fin de course et/ou de moyens de temporisation.

10. Store à enrouleur motorisé selon l'une quelconque des revendications 1 à 9, **caractérisé en ce que** lesdits moyens de motorisation (110) comprennent un moteur et des moyens de réduction correspondants montés à l'intérieur dudit tube d'enroulement (12).

11. Store à enrouleur motorisé selon l'une quelconque des revendications 1 à 9, **caractérisé en ce que** lesdits moyens de motorisation (110) comprennent un moteur et des moyens de réduction correspondants montés dans le prolongement dudit tube d'enroulement (12).

12. Store à enrouleur motorisé selon l'une quelconque des revendications 1 à 9, **caractérisé en ce que** lesdits moyens de motorisation (110) comprennent un moteur et des moyens de réduction correspondants montés parallèlement audit tube d'enroulement (12).

13. Store à enrouleur motorisé selon l'une quelconque des revendications 1 à 9, **caractérisé en ce que** lesdits moyens de motorisation (110) comprennent un moteur et des moyens de réduction correspondants montés perpendiculairement audit tube d'enroulement (12).

## Patentansprüche

1. Rollo mit motorisiertem Aufrollmechanismus, das einen auf eine Aufrollwalze (12) angebrachten, ausfahrbaren Vorhang (11) aufweist, wobei die Aufrollwalze durch einen Motorantrieb (110) mitgenommen werden kann,
**dadurch gekennzeichnet, dass** Mittel (111) zur selektiven Kopplung der Aufrollwalze (12) mit dem Motorantrieb (110) vorgesehen sind, so dass die Aufrollwalze durch den Motorantrieb unter ersten vorgegebenen Bedingungen mitgenommen und unter zweiten vorgegebenen Bedingungen vom Motorantrieb abgekoppelt wird.

2. Rollo mit motorisiertem Aufrollmechanismus nach Anspruch 1,
**dadurch gekennzeichnet, dass** die Aufrollwalze (12) mit dem Motorantrieb (110) bei dem Wiederaufrollen des Vorhangs (11) gekoppelt wird, wobei das Ausfahren des Vorhangs (11) mit Wirkung von mindestens einem Schwingarm (14₁, 14₂) erfolgt, der eine am freien Ende des Vorhangs (11) angebrachte Zugstange (13) mit Wirkung von Rückholmitteln (18) antreibt.

3. Rollo mit motorisiertem Aufrollmechanismus nach Anspruch 2,
**dadurch gekennzeichnet, dass** beim Abrollen des Vorhangs (11) die Kopplungsmittel (111) so wirken, dass die Aufrollwalze (12) sich frei dreht, so lange wie ihre Umdrehungsgeschwindigkeit unterhalb eines vorgegebenen Wertes liegt und mit dem Motorantrieb (110) gekoppelt wird, wenn die Umdrehungsgeschwindigkeit der Aufrollwalze (12) größer oder gleich der Umdrehungsgeschwindigkeit des Motorantriebs (110) ist.

4. Rollo mit motorisiertem Aufrollmechanismus nach einem der Ansprüche 1 bis 3,
**dadurch gekennzeichnet, dass** die Kopplungsmittel (111) ein freies Rad (111) umfassen.

5. Rollo mit motorisiertem Aufrollmechanismus nach Anspruch 4,
**dadurch gekennzeichnet, dass** das freie Rad (111) mindestens eine mit der Aufrollwalze (12) bzw. mit dem Motorantrieb (110) verbundene Ratsche (25) sowie mindestens eine mit dem Motorantrieb (110) bzw. mit der Aufrollwalze (12) verbundene Sperrklinke (22), die mit der Ratsche bzw. mit den Ratschen (25) zusammenwirken kann, umfasst.

6. Rollo mit motorisiertem Aufrollmechanismus nach Anspruch 4,
**dadurch gekennzeichnet, dass** das freie Rad (111) einen kegelförmigen Antrieb besitzt.

7. Rollo mit motorisiertem Aufrollmechanismus nach einem der Ansprüche 2 bis 6,
**dadurch gekennzeichnet, dass** zwei symmetrische Schwingarme (14₁, 14₂) vorgesehen sind, die sich mit Wirkung einer sie verbindenden Feder (18) entfalten.

8. Rollo mit motorisiertem Aufrollmechanismus nach einem der Ansprüche 2 bis 7,
**dadurch gekennzeichnet, dass** der Schwingarm bzw. die Schwingarme (14₁, 14₂) sich jeweils aus zwei Elementen (141, 142) zusammensetzen, die einen zweiteiligen Gelenkhebel bilden.

9. Rollo mit motorisiertem Aufrollmechanismus nach einem der Ansprüche 1 bis 8,
**dadurch gekennzeichnet, dass** die Stromzufuhr des Motorantriebs (110) beim Ab- und/oder Aufrollen unter der Wirkung von Endstellungsfühlern und/oder von Zeitschaltern abgestellt wird.

10. Rollo mit motorisiertem Aufrollmechanismus nach einem der Ansprüche 1 bis 9,
**dadurch gekennzeichnet, dass** der Motorantrieb (110) einen Motor sowie entsprechende Untersetzungsmittel aufweist, die im Inneren der Aufrollwalze (12) untergebracht sind.

11. Rollo mit motorisiertem Aufrollmechanismus nach einem der Ansprüche 1 bis 9,
**dadurch gekennzeichnet, dass** der Motorantrieb (110) einen Motor sowie entsprechende Untersetzungsmittel aufweist, die in der Verlängerung der Aufrollwalze (12) untergebracht sind.

12. Rollo mit motorisiertem Aufrollmechanismus nach einem der Ansprüche 1 bis 9,
**dadurch gekennzeichnet, dass** der Motorantrieb (110) einen Motor sowie entsprechende Untersetzungsmittel aufweist, die parallel zur Aufrollwalze (12) angebracht sind.

13. Rollo mit motorisiertem Aufrollmechanismus nach einem der Ansprüche 1 bis 9,
**dadurch gekennzeichnet, dass** der Motorantrieb (110) einen Motor sowie entsprechende Untersetzungsmittel aufweist, die senkrecht zur Aufrollwalze (12) angebracht sind.

## Claims

1. Blind with a motorised winding mechanism, said blind being of the type having a screen (1) which can be deployed and is mounted on a winding tube (12) capable of being driven in rotation by motorising means (110), **characterised in that** it comprises means (111) for the selective coupling of the said winding tube (12) to the said motorising means (110), in such a way that the said winding tube is driven by the said motorising means under a first set of predetermined conditions, and is uncoupled from the said motorising means under a second set of predetermined conditions.

2. Blind with a motorised winding mechanism according to Claim 1, **characterised in that** the said winding tube (12) is coupled to the said motorising means (110) when the said screen (11) is wound up again, the unwinding of the said screen (11) taking place under the action of at least one link (14₁, 14₂) driving a draw-bar (13) mounted on the free end of the said screen (11), under the action of returning means (18).

3. Blind with a motorised winding mechanism according to Claim 2, **characterised in that**, when the said screen (11) is unwound, the said coupling means (111) act in such a way that the said winding tube (12) turns freely, as long as its speed of rotation is lower than a predetermined speed, and comes into engagement with the said motorising means (110) when the said speed of rotation of the winding tube (12) is greater than, or equal to, the speed of rotation of the said motorising means (110).

4. Blind with a motorised winding mechanism according to any of Claims 1 to 3, **characterised in that** the said coupling means (111) comprise a free wheel (111).

5. Blind with a motorised winding mechanism according to Claim 4, **characterised in that** the said free wheel (111) comprises at least one ratchet (25) which is integral with the said winding tube (12), or with the said motorising means (110) respectively, and at least one pawl (22) which is integral with the said motorising means (110), or with the said winding tube (12) respectively, and is capable of cooperating with the said ratchet or ratchets (25).

6. Blind with a motorised winding mechanism according to Claim 4, **characterised in that** the said free wheel (111) comprises a conical driving system.

7. Blind with a motorised winding mechanism according to any of Claims 2 to 6, **characterised in that** it comprises two symmetrical links (14₁, 14₂) which are deployed under the action of a spring (18) which connects them.

8. Blind with a motorised winding mechanism according to any of Claims 2 to 7, **characterised in that** the said link or links (14₁, 14₂) is/are made up of two elements (141, 142) forming compasses.

9. Blind with a motorised winding mechanism according to any of Claims 1 to 8, **characterised in that** the supply to the said motorising means (110) is interrupted, when winding and/or unwinding occurs, under the action of end-of-travel detecting means and/or delaying means.

10. Blind with a motorised winding mechanism according to any of Claims 1 to 9, **characterised in that** the said motorising means (110) comprise a motor and suitable gearing-down means which are mounted inside the said winding tube (12).

11. Blind with a motorised winding mechanism according to any of Claims 1 to 9, **characterised in that** the said motorising means (110) comprise a motor and suitable gearing-down means which are mounted in the prolongation of the said winding tube (12).

12. Blind with a motorised winding mechanism according to any of Claims 1 to 9, **characterised in that** the said motorising means (110) comprise a motor and suitable gearing-down means which are mounted parallel to the said winding tube (12).

13. Blind with a motorised winding mechanism according to any of Claims 1 to 9, **characterised in that** the said motorising means (110) comprise a motor and suitable gearing-down means which are mounted perpendicularly to the said winding tube (12).
